# EUROPEAN PATENT SPECIFICATION

(11) **EP 4 151 871 B1**
(45) Date of publication and mention of the grant of the patent: **20.11.2024**
(21) Application number: 22194321.0
(22) Date of filing: 07.09.2022
(51) Int. Cl.: F16C 27/06, F16C 33/06, F16F 1/38, F16F 1/376, F16C 17/10

(54) **ELASTIC BUSHING WITH AN ORIENTED STRUCTURE**
ELASTISCHE BUCHSE MIT ORIENTIERTER STRUKTUR
DOUILLE ÉLASTIQUE À STRUCTURE ORIENTÉE

(30) Priority: 17.09.2021 IT 202100023966
(43) Date of publication of application: 22.03.2023
(73) Proprietor: SAV Srl, 24040 Ciserano loc. Zingonia (BG) (IT)
(72) Inventor: VEZZOLI, Rossella, 24068 SERIATE (BG) (IT)
(74) Representative: Mari, Marco Giovanni

(56) References cited:
- EP-B1- 1 368 572
- DE-A1- 102013 223 295
- US-A1- 2021 148 407

## Description

### Technical field of application

The invention concerns an elastic bushing with an oriented structure of the type with elastic absorption of radial stresses.

Bushings with elastic absorption of radial stress are used to connect a pin to an axis of a mechanical component, where the pin is subject to angular displacements with respect to said axis. They are also used in various sectors, including the field of heavy goods vehicles. Here they are used, for example, to connect the leaf spring eyes of the rear suspensions to the chassis of the vehicle, or to connect the supporting arms of the front wheels to the chassis and to the hub of these wheels, respectively, or yet again to connect connecting rods, arms, etc.

### Background art

There are known bushings of the type with elastic absorption of radial stress comprising:
- an inner ring made of self-lubricating material comprising a first longitudinal cut;
- an elastic outer ring made of rubber;
- a reinforcing sleeve, made of substantially rigid material, interposed between said inner ring and said elastic outer ring, comprising a second longitudinal cut.

Said reinforcing sleeve is coupled to the inner surface of said elastic outer ring, usually by vulcanization, while said reinforcing ring is freely inserted over said inner ring made of self-lubricating material.

Said first and second cut are useful for assembly of the bushing and its mounting in a leaf spring eye of the suspensions, as they facilitate temporary deformation of the components on which they are produced when they must be inserted with force with respect to one another.

In particular, said first cut is useful for insertion of said inner ring mad of lubricating materials inside the reinforcing sleeve on which the elastic outer ring is normally already vulcanized; while said second cut is useful for insertion of the entire bushing into the eye of the leaf spring of the suspension.

The European patent no. EP 1368572 by the same applicant discloses an elastic bushing as described above.

Further prior art is disclosed by the document US 3424503, which describes a bearing (for example for supporting a rotating shaft) comprising a tubular body made of rubber, a bushing made of polyamide reinforced with fiberglass, arranged inside and connected to said body made of rubber, and a sleeve made of self-lubricating material inserted into said bushing, to receive an axis or shaft to be connected to the bearing. The bushing and the body made of rubber are firmly connected by a dovetail coupling, or by vulcanization of the body made of rubber to the bushing, while also in this case the sleeve made of self-lubricating material is freely inserted inside the bushing.

Similarly, document US 2021/148407 A1, which discloses the features of the preamble of claim 1, discloses an elastic bushing for the support of motor vehicle parts, comprising:
- an inner ring made of self-lubricating material comprising a first longitudinal cut;
- an elastic outer ring;
- a reinforcing sleeve made of a substantially rigid material, interposed between said inner ring and said elastic outer ring, where said reinforcing sleeve is coupled to the inner surface of said elastic outer ring and comprises a second longitudinal cut.

In this document, there is no reference to how the bushing is assembled, other than indication that the elastic outer ring is connected to the inner ring in a form-coupled, force-coupled, and/or material-coupled (vulcanized) manner.

Therefore, in general in both cases the reinforcing ring coupled to the outer elastic ring is freely inserted on the inner ring made of self-lubricating material, without the interposition of any locking means and is thus free to rotate thereon by a few degrees during use of the bushing.

Disadvantageously, during mounting of the bushing, if particular attention is not paid, said first and second cut can be aligned and superimposed, creating a weak point in the bushing. If the two cuts are superimposed, the bushing has a line without the reinforced part, hence without the thickness both of the sleeve and of the inner ring, but resistant only with the rubber of the elastic outer ring.

It is clear that this line forms a weak point facilitating cracking and breakage of the elastic ring subjected to continuous deformations due to the radial stresses.

Disadvantageously, these bushings therefore have the drawback of not being particularly suitable for applications that require high radial rigidity and the capacity to withstand considerable radial loads.

To avoid these problems, the mounting step of conventional bushings requires a great deal of attention and lengthy times.

Moreover, as there are no anti-rotation locking means, during use of bushing the inner ring made of self-lubricating material can, albeit slightly, rotate inside the reinforcing sleeve, and therefore alignment and superimposing of the two cuts can occur even after mounting.

### Presentation of the invention

The object of the present invention is to eliminate the drawbacks mentioned above.

In particular, the object of the present invention is to produce an elastic bushing with an oriented structure that is simple and quick to mount, that is safe and reliable over time, that can reliably withstand considerable radial loads and that is inexpensive to manufacture.

The objects are achieved by an elastic bushing with an oriented structure comprising:
- an inner ring made of self-lubricating material comprising a first longitudinal cut;
- an elastic outer ring;
- a reinforcing sleeve made of substantially rigid material, interposed between said inner ring and said elastic outer ring, where said reinforcing sleeve is coupled to the inner surface of said elastic outer ring and comprises a second longitudinal cut,
characterized in that it comprises guaranteed orientation means of the mutual position between said inner ring and said reinforcing sleeve, adapted to define therebetween a definite mounting position so that said first longitudinal cut of said inner ring and said second longitudinal cut of said reinforcing sleeve are not superimposed, and adapted to prevent the risk of unwanted rotations between the parts, wherein said guaranteed orientation means comprise form-fitting coupling means of male-female type.

According to a possible embodiment, said coupling means comprise at least one tooth protruding from the outer surface of said inner ring and at least one corresponding seat present on the inner surface of said reinforcing sleeve, where said at least one tooth is adapted to occupy said at least one seat to couple said inner ring and said reinforcing sleeve in a definite position.

Preferably:
- said at least one tooth is arranged at 90° with respect to said first cut of said inner ring;
- said at least one seat is arranged at 180° with respect to said second cut of said reinforcing sleeve,
so that, when the bushing is assembled, said first and second cut are staggered by 90°.

Advantageously, said at least one seat is formed directly on said reinforcing sleeve by means of the same material thereof, and said at least one tooth is formed directly on said inner ring by means of the same material thereof.

According to a further aspect of the invention, said at least one tooth and said at least one seat have a complementary truncated pyramid shape.

In particular, the area of the cross section of said at least one tooth is smaller than the area of the corresponding cross section of said at least one seat.

Advantageously, said at least one tooth and said at least one seat are arranged on the edge of said inner ring and of said reinforcing sleeve, respectively, so as to be visible from the outside.

Moreover, said inner ring and said elastic outer ring are provided with stop collars.

The invention also relates to a motor vehicle characterized in that it comprises at least one elastic bushing with an oriented structure as described above.

The main advantage of the present invention concerns the reliability and duration of the installed bushing obtained through a suitable mounting step of the bushing itself.

The orientation means between said inner ring and said reinforcing sleeve ensure therebetween a definite mounting position: the orientation of the components during mounting is in fact guaranteed by cooperation between the respective form-fitting coupling means of male-female type.

Positioning of the ring made of self-lubricating material inside the reinforcing sleeve, inserting the protruding tooth into the corresponding seat, ensures that said first longitudinal cut of said inner ring and said second longitudinal cut of said reinforcing sleeve are not superimposed but are staggered by a definite angle, which can be chosen appropriately based on the application of the bushing.

In this way the rigidity given to the elastic bushing by the inner ring and by the reinforcing sleeve is in fact even more uniform and does not have discontinuous points that could facilitate deformation and cutting of the elastic outer ring made of rubber of the bushing.

Due to the staggering of the two cuts, preferably by 90°, the deformation of the bushing when it is stressed in radial direction is uniform along the whole of the circumference.

The coupling means are clearly visible and easily connectable: advantageously, it is not necessary to pay attention to positioning of the cuts during mounting of the bushing, which in fact takes place in an entirely automatic way.

The dimensions of tooth and protrusion are such as not to create problems of interference.

Said coupling means also act as locking element between the inner ring made of self-lubricating material and the reinforcing sleeve during operation of the bushing, when it is inserted into the leaf spring eye and in use, without the risk of unwanted rotations between the parts.

### Brief description of the drawings

The advantages of the invention will be more apparent in the description below, in which a preferred embodiment is described by way of non-limiting example, with the aid of the figures, wherein:

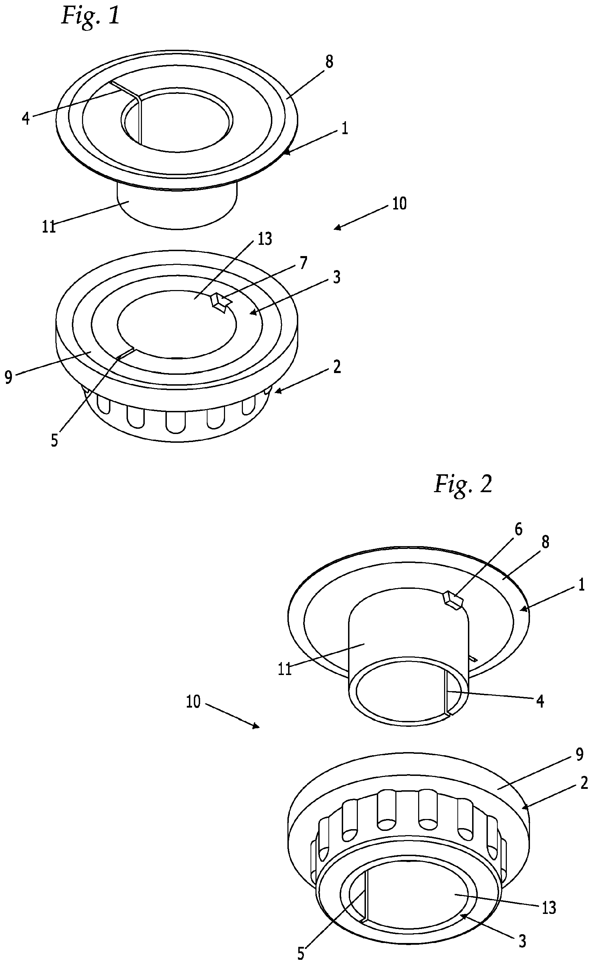

Figs. 1 and 2 represent, in an exploded axonometric top and bottom view, an elastic bushing with an oriented structure produced in conformity with the present invention;
Figs. 3, 4, 5 and 6 represent the same bushing in a flat top view, flat bottom view and sectional view according to an axial plane and a plane orthogonal thereto, respectively;
Fig. 7 represents a detail of the section of Fig. 6.

### Detailed description of a preferred embodiment of the invention

With reference to the drawings, the elastic bushing 10 with an oriented structure according to the invention essentially comprises an inner ring 1, made of self-lubricating plastic material, an elastic outer ring 2, made of rubber, an annular reinforcing sleeve 3, of suitable thickness, fixed to the inner cylindrical surface of said outer ring 2 made of rubber, made of a substantially rigid material, such as nylon.

The coupling between said elastic outer ring 2 and said reinforcing sleeve 3 is advantageously produced with a vulcanization process.

Said inner ring 1 made of self-lubricating material comprises a first longitudinal cut 4.

Said reinforcing sleeve 3 comprises a second longitudinal cut 5.

Said elastic bushing 10 comprises orientation means of the mutual position between said inner ring 1 and said reinforcing sleeve 3.

Said orientation means comprise form-fitting coupling means 6, 7 of male-female type.

Said orientation means are adapted to define between said inner ring 1 and said reinforcing sleeve 3 a definite mounting position so that said first longitudinal cut 4 of said inner ring 1 and said second longitudinal cut 5 of said reinforcing sleeve 3 are not superimposed, but staggered by a predetermined angle.

In the variant illustrated, said orientation means comprise a tooth 6 protruding from the outer surface 11 of said inner ring 1 and a corresponding seat 7 present on the inner surface 13 of said reinforcing sleeve 3.

When the bushing 10 is assembled, said tooth 6 engages said seat 7 to stably couple said inner ring 1 and said reinforcing sleeve 3 in a definite position.

In particular, said tooth 6 is arranged staggered by 90° with respect to said first cut 4 of said inner ring 1, while said seat 6 is arranged staggered by 180° with respect to said second cut 5 of said reinforcing sleeve 3.

In this way, when the bushing 10 is assembled, said first 4 and second cut 5 are staggered by 90°.

Said seat 7 is formed directly on said reinforcing sleeve 3 by means of the same material thereof, just as said tooth 6 is formed directly on the outer surface 11 of said inner ring 1 made of lubricating material by means of the same material thereof.

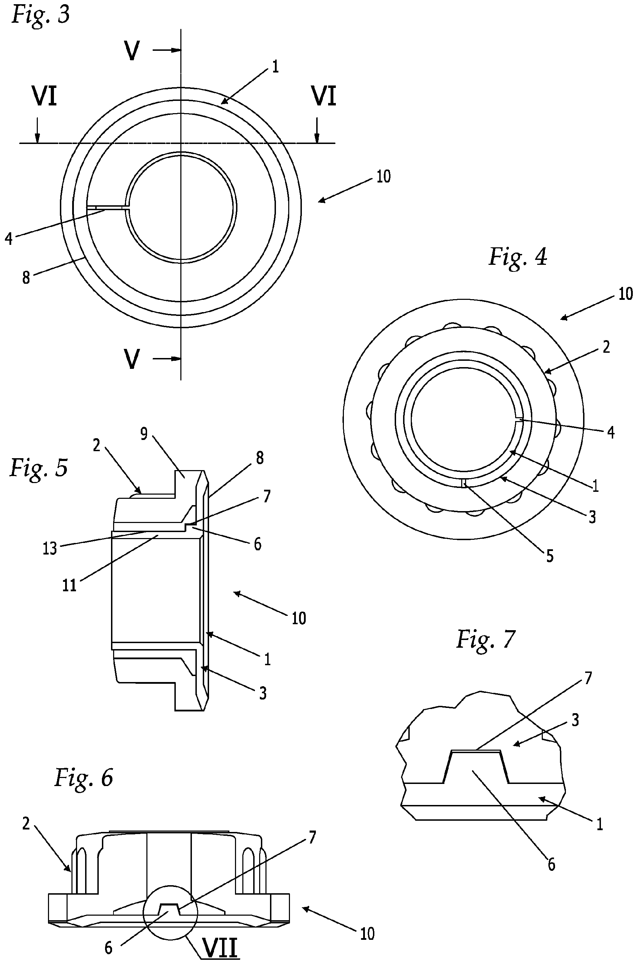

With particular reference to Figs. 6 and 7, said tooth 6 and said seat 7 have a complementary truncated pyramid shape.

The area of the cross section of said tooth 6 is smaller than the area of the cross section of said seat 7 so that the tooth 6 can enter the seat without interference and friction.

The truncated pyramid shape of the seat 7 and of the tooth 6, with the inclined faces creating a guide, facilitate self-centring of the components so that assembly of the bushing 10 is rapid and easy.

Said tooth 6 and said seat 7 are arranged on the edge of said inner ring 1 and of said reinforcing sleeve 3, respectively, so as to be visible from the outside and further facilitate the operator in coupling of the parts.

It is clear that, although a bushing 10 with a tooth 6 and a seat 7 has been illustrated, the presence of a plurality of teeth and corresponding seats allows the same advantages of the invention to be achieved.

Moreover, in the example of embodiment illustrated, the inner ring 1 and ring 2 made of rubber are provided with stop collars 8, 9, which allow the bushing 10 to withstand compression forces parallel to the axis of the bushing itself.

Assembly of the elastic bushing 10 with an oriented structure according to the invention takes place by centring the tooth 6 of the inner ring 1 in the seat 7 of the reinforcing sleeve 3, on which the outer ring 2 made of rubber was previously vulcanized, while the inner ring 1 is inserted into the sleeve itself. Said first 4 and second 5 cut will be automatically staggered from each other.

Subsequent mounting of the bushing 10 takes place by forcing the outer surface of the rubber elastic outer ring 2 into the seat of the bushing. The bushing 10 is thus fixed in its seat by the friction present between the rubber and the inner surface of the housing seat. A pin is mounted free to rotate on the inner surface of the inner ring 1.

During normal operation, the rubber outer ring 2 absorbs impacts and radial stresses transmitted by the pin to the bushing 10, while the reinforcing sleeve 3, of suitable thickness, gives the bushing 10 the desired radial stiffness, limiting crushing and longitudinal deformation of the outer ring 2.

## Claims

1. Elastic bushing (10) with an oriented structure, comprising:
- an inner ring (1) made of self-lubricating material comprising a first longitudinal cut (4);
- an elastic outer ring (2);
- a reinforcing sleeve (3) made of a substantially rigid material, interposed between said inner ring (1) and said elastic outer ring (2), where said reinforcing sleeve (3) is coupled to the inner surface of said elastic outer ring (2) and comprises a second longitudinal cut (5),
**characterized in that** it comprises guaranteed orientation means of the mutual position between said inner ring (1) and said reinforcing sleeve (3), adapted to define therebetween a definite mounting position so that said first longitudinal cut (4) of said inner ring (1) and said second longitudinal cut (5) of said reinforcing sleeve (3) are not superimposed, and adapted to prevent the risk of unwanted rotations between the parts, wherein said guaranteed orientation means comprise form-fitting coupling means (6, 7) of male-female type.

2. Elastic bushing (10) with an oriented structure according to claim 1, **characterized in that** said coupling means comprise at least one tooth (6) protruding from the outer surface (11) of said inner ring (1) and at least one corresponding seat (7) present on the inner surface (13) of said reinforcing sleeve (3), where said at least one tooth (6) is adapted to occupy said at least one seat (7) to couple said inner ring (1) and said reinforcing sleeve (3) in a definite position.

3. Elastic bushing (10) with an oriented structure according to claim 2, **characterized in that**:
- said at least one tooth (6) is arranged at 90° with respect to said first cut (4) of said inner ring (1);
- said at least one seat (7) is arranged at 180° with respect to said second cut (5) of said reinforcing sleeve (3),
so that, when the bushing (10) is assembled, said first (4) and second (5) cut are staggered by 90°.

4. Elastic bushing (10) with an oriented structure according to claim 2, **characterized in that** said at least one seat (7) is formed directly on said reinforcing sleeve (3) by means of the same material thereof, and said at least one tooth (6) is formed directly on said inner ring (1) by means of the same material thereof.

5. Elastic bushing (10) with an oriented structure according to claim 2, **characterized in that** said at least one tooth (6) and said at least one seat (7) have a complementary truncated pyramid shape.

6. Elastic bushing (10) with an oriented structure according to claim 2, **characterized in that** the area of the cross section of said at least one tooth (6) is smaller than the area of the corresponding cross section of said at least one seat (7).

7. Elastic bushing (10) with an oriented structure according to claim 2, **characterized in that** said at least one tooth (6) and said at least one seat (7) are arranged on the edge of said inner ring (1) and of said reinforcing sleeve (3), respectively, so as to be visible from the outside.

8. Elastic bushing (10) with an oriented structure according to claim 1, **characterized in that** said inner ring (1) and said elastic outer ring (2) are provided with stop collars (8, 9).

9. A motor vehicle, **characterized in that** it comprises at least one elastic bushing (10) with an oriented structure according to at least one of the preceding claims.

## Patentansprüche

1. Elastische Buchse (10) mit einer ausgerichteten Struktur, umfassend:
- einen Innenring (1) aus selbstschmierendem Material, umfassend einen ersten Längsschnitt (4);
- einen elastischen Außenring (2);
- eine Verstärkungshülse (3) aus einem im Wesentlichen starren Material, die zwischen dem besagten Innenring (1) und dem besagten elastischen Außenring (2) angeordnet ist, wobei die besagte Verstärkungshülse (3) mit der Innenfläche des besagten elastischen Außenrings (2) verbunden ist und einen zweiten Längsschnitt (5) umfasst,
**dadurch gekennzeichnet, dass** sie Mittel zur garantierten Ausrichtung der gegenseitigen Position zwischen dem besagten Innenring (1) und der besagten Verstärkungshülse (3) umfasst, geeignet, um dazwischen eine bestimmte Montageposition zu definieren, so dass der besagte erste Längsschnitt (4) des besagten Innenrings (1) und der besagte zweite Längsschnitt (5) der besagten Verstärkungshülse (3) nicht übereinander liegen, und geeignet sind, das Risiko unerwünschter Drehungen zwischen den Teilen zu verhindern, wobei die besagten garantierten Ausrichtungsmittel formschlüssige Kopplungsmittel (6, 7) vom Typ männlich-weiblich umfassen.

2. Elastische Buchse (10) mit einer ausgerichteten Struktur gemäß Anspruch 1, **dadurch gekennzeichnet, dass** die besagten Kopplungsmittel mindestens einen Zahn (6), der von der Außenfläche (11) des besagten Innenrings (1) hervorsteht, und mindestens einen entsprechenden Sitz (7), der auf der Innenfläche (13) der besagten Verstärkungshülse (3) vorhanden ist, umfassen, wobei der besagte mindestens eine Zahn (6) geeignet ist, den besagten mindestens einen Sitz (7) einzunehmen, um den besagten Innenring (1) und die besagte Verstärkungshülse (3) in einer bestimmten Position zu koppeln.

3. Elastische Buchse (10) mit einer ausgerichteten Struktur gemäß Anspruch 2, **dadurch gekennzeichnet, dass**:
- der besagte mindestens eine Zahn (6) in Bezug auf den besagten ersten Längsschnitt (4) des besagten Innenrings (1) im 90°-Winkel angeordnet ist;
- der besagte mindestens eine Sitz (7) in Bezug auf den besagten zweiten Längsschnitt (5) der besagten Verstärkungshülse (3) im 180°-Winkel angeordnet ist,
so dass bei der Montage der Buchse (10) der besagte erste (4) und der zweite (5) Längsschnitt um 90° versetzt sind.

4. Elastische Buchse (10) mit einer ausgerichteten Struktur gemäß Anspruch 2, **dadurch gekennzeichnet, dass** der besagte mindestens eine Sitz (7) direkt auf der besagten Verstärkungshülse (3) mittels desselben Materials geformt ist, und der besagte mindestens eine Zahn (6) direkt auf dem besagten Innenring (1) mittels desselben Materials geformt ist.

5. Elastische Buchse (10) mit einer ausgerichteten Struktur gemäß Anspruch 2, **dadurch gekennzeichnet, dass** der besagte mindestens eine Zahn (6) und der besagte mindestens eine Sitz (7) eine komplementäre pyramidenstumpfförmige Form aufweisen.

6. Elastische Buchse (10) mit einer ausgerichteten Struktur gemäß Anspruch 2, **dadurch gekennzeichnet, dass** die Fläche des Querschnitts des besagten mindestens einen Zahns (6) kleiner ist als die Fläche des entsprechenden Querschnitts des besagten mindestens einen Sitzes (7).

7. Elastische Buchse (10) mit einer ausgerichteten Struktur gemäß Anspruch 2, **dadurch gekennzeichnet, dass** der besagte mindestens eine Zahn (6) und der besagte mindestens eine Sitz (7) am Rand des besagten Innenrings (1) bzw. der besagten Verstärkungshülse (3) angeordnet sind, so dass sie von außen sichtbar sind.

8. Elastische Buchse (10) mit einer ausgerichteten Struktur gemäß Anspruch 1, **dadurch gekennzeichnet, dass** der besagte Innenring (1) und der besagte elastische Außenring (2) mit Anschlagstellringen (8, 9) versehen sind.

9. Ein Kraftfahrzeug, **dadurch gekennzeichnet, dass** es mindestens eine elastische Buchse (10) mit einer ausgerichteten Struktur gemäß mindestens einem der vorhergehenden Ansprüche umfasst.

## Revendications

1. Douille élastique (10) à structure orientée, comprenant :
- une bague intérieure (1) en matériau autolubrifiant comportant une première coupe longitudinale (4) ;
- une bague extérieure élastique (2) ;
- un manchon de renforcement (3) en matériau substantiellement rigide, interposé entre ladite bague intérieure (1) et ladite bague extérieure élastique (2), où ledit manchon de renforcement (3) est couplé à la surface intérieure de ladite bague extérieure élastique (2) et comprend une seconde coupe longitudinale (5),
**caractérisée par le fait qu'**elle comprend des moyens d'orientation de la position mutuelle entre ladite bague intérieure (1) et ledit manchon de renforcement (3), adaptés pour définir entre eux une position de montage définie de sorte que ladite première coupe longitudinale (4) de ladite bague intérieure (1) et ladite deuxième coupe longitudinale (5) dudit manchon de renforcement (3) ne soient pas superposées, et adaptés pour prévenir le risque de rotations indésirables entre les pièces, où lesdits moyens d'orientation garantie comprennent des moyens d'accouplement par complémentarité de formes (6, 7) de type mâle-femelle.

2. Douille élastique (10) à structure orientée selon la revendication 1, **caractérisée par le fait que** lesdits moyens de couplage comprennent au moins une dent (6) faisant saillie de la surface extérieure (11) de ladite bague intérieure (1) et au moins un siège correspondant (7) présent sur la surface intérieure (13) dudit manchon de renforcement (3), où ladite au moins une dent (6) est adaptée pour occuper ledit au moins un siège (7) afin de coupler ladite bague intérieure (1) et ledit manchon de renforcement (3) dans une position définie.

3. Douille élastique (10) à structure orientée selon la revendication 2, **caractérisée par le fait que** :
- ladite au moins une dent (6) est disposée à 90° par rapport à ladite première coupe (4) de ladite bague intérieure (1) ;
- ledit au moins un siège (7) est disposé à 180° par rapport à ladite deuxième coupe (5) dudit manchon de renforcement (3),
de sorte que, lors de l'assemblage de la douille (10), lesdites première (4) et seconde (5) coupes sont décalées de 90°.

4. Douille élastique (10) à structure orientée selon la revendication 2, **caractérisée par le fait que** ledit au moins un siège (7) est formé directement sur ledit manchon de renforcement (3) au moyen du même matériau que celui-ci, et que ladite au moins une dent (6) est formée directement sur ladite bague intérieure (1) au moyen du même matériau que celle-ci.

5. Douille élastique (10) à structure orientée selon la revendication 2, **caractérisée par le fait que** ladite au moins une dent (6) et ledit au moins un siège (7) ont une forme complémentaire de pyramide tronquée.

6. Douille élastique (10) à structure orientée selon la revendication 2, **caractérisée par le fait que** la surface de la section transversale de ladite au moins une dent (6) est inférieure à la surface de la section transversale correspondante dudit au moins un siège (7).

7. Douille élastique (10) à structure orientée selon la revendication 2, **caractérisée par le fait que** ladite au moins une dent (6) et ledit au moins un siège (7) sont disposés sur le bord de ladite bague intérieure (1) et de ledit manchon de renforcement (3), respectivement, de manière à être visibles de l'extérieur.

8. Douille élastique (10) à structure orientée selon la revendication 1, **caractérisée par le fait que** ladite bague intérieure (1) et ladite bague extérieure élastique (2) sont pourvues de colliers de butée (8, 9).

9. Véhicule automobile, **caractérisé par le fait qu'**il comprend au moins une douille élastique (10) à structure orientée selon au moins l'une des revendications précédentes.
